**Europäisches Patentamt**

**European Patent Office**

**Office européen des brevets**

(19)

(11) Veröffentlichungsnummer : **0 061 161**
**B1**

# EUROPÄISCHE PATENTSCHRIFT

(12)

(45) Veröffentlichungstag der Patentschrift :
**17.07.85**

(21) Anmeldenummer : **82102240.7**

(22) Anmeldetag : **19.03.82**

(51) Int. Cl.⁴ : **B 01 D 53/26**

(54) Vorrichtung zum Trocknen feuchter Abluft aus einem oder mehreren Schüttgut-Trocknungsbehältern.

(30) Priorität : **20.03.81 DE 3110873**
**08.08.81 DE 3131471**

(43) Veröffentlichungstag der Anmeldung :
**29.09.82 Patentblatt 82/39**

(45) Bekanntmachung des Hinweises auf die Patenterteilung : **17.07.85 Patentblatt 85/29**

(84) Benannte Vertragsstaaten :
**FR GB IT**

(56) Entgegenhaltungen :
**DE-A- 2 945 892**
**US-A- 2 751 034**
**US-A- 2 759 560**

(73) Patentinhaber : **Gräff, Roderich Wilhelm, Dr.-Ing.**
**Kollwitzweg 19**
**D-6100 Darmstadt-Arheilgen (DE)**

(72) Erfinder : **Gräff, Roderich Wilhelm, Dr.-Ing.**
**Kollwitzweg 19**
**D-6100 Darmstadt-Arheilgen (DE)**

(74) Vertreter : **Zinngrebe, Horst, Dr.rer.nat.**
**Patentanwälte Dipl.-Ing. G. Schliebs Dr.rer.nat. Horst**
**Zinngrebe Claudiusweg 17 A**
**D-6100 Darmstadt (DE)**

## Beschreibung

Die Erfindung betrifft ein Verfahren zum Trocknen von Abluft aus einem oder mehreren parallel angeordneten Schüttgut-Trocknungsbehältern, die durch wenigstens eine mit Adsorptionsmittel gefüllte Kammer geführt und in einem geschlossenen Kreislauf dem oder den Trocknungsbehältern wieder zugeleitet wird, wobei die Kammer in zeitlichen Abständen mit einem zweiten Luftkreislauf regeneriert wird. Die Erfindung betrifft ferner eine Vorrichtung zur Durchführung des Verfahrens.

Zum Trocknen von Schüttgütern aller Art, insbesondere von Kunststoffpulvern und -granulaten, in dem Schüttgut-Trocknungsbehälter wird warme, trockene Trocknungsluft durch die im unteren Abschnitt des Trocknungsbehälters mündende Zuluftleitung in den Trocknungsbehälter eingeblasen, strömt dem durch den Trocknungsbehälter niedersinkenden Schüttgut entgegen, heizt dieses auf, nimmt von diesem unter Abkühlung Feuchtigkeit auf und verläßt den Trocknungsbehälter am oberen Abschnitt durch die Abluftleitung. Die feuchte Abluft wird dann durch eine mit Adsorptionsmittel gefüllte Kammer, die in einem Trockner angeordnet ist, geführt und von dem Gebläse durch eine Heizeinrichtung wieder in die Zuluftleitung gedrückt.

Verringert sich die pro Zeiteinheit durch den Trocknungsbehälter von oben nach unten durchsinkende Schüttgutmenge, so steigt die Temperatur der Abluft. Dieser Effekt kann dazu führen, daß die Abluft den Trocknungsbehälter so warm verläßt, daß sie mit einer relativ hohen Temperatur in die Kammer eintritt. Das als Adsorptionsmittel für die Feuchtigkeit üblicherweise verwendete Silicagel oder Molekularsieb hat jedoch die Eigenschaft, daß deren Feuchtigkeitsaufnahme bei höherer Temperatur stark zurückgeht. Abluft mit einer Temperatur oberhalb 40 °C-60 °C wird dann in der Kammer nicht mehr vollständig getrocknet, und die Zuluft enthält dann bereits beim Eintritt in den Trocknungsbehälter Wasserdampf und damit einen verschlechterten Taupunkt. Dadurch verläuft der Trocknungsvorgang im Trocknungsbehälter verlangsamt oder nicht vollständig. Darüber hinaus steigt die Temperatur in dem Trockenluft-Trockner unerwünscht an, was vor allem bei einem geschlossenen Trockner-Gehäuse schädlich für die hierin angebrachten Aggregate ist. Schließlich bedingt die höhere Rücklufttemperatur gesteigerte Energieverluste von den Luftleitungen und dem Trockner in den Arbeitsraum.

Die Erfindung soll daher Maßnahmen schaffen, die ein schädliches Aufheizen des Trockenluft-Trockners verhindern und auch bei herabgesetztem Granulatdurchsatz einen guten Taupunkt der Trockenluft ermöglichen und die in dem gesamten System aus Luftleitungen, Trockner und Schüttgut-Trocknungsbehälter(n) anfallenden Energieverluste herabsetzen. Das eingangs genannte Verfahren wird dazu erfindungsgemäß so gestaltet, daß die Menge des Luftdurchsatzes durch den bzw. die Schüttgut-Trocknungsbehälter in Abhängigkeit von der Temperatur der Abluft aus dem bzw. den jeweiligen Trocknungsbehältern gesteuert wird. Im Gegensatz zu der üblichen Auffassung, daß eine möglichst große Trockenluftmenge für den Trocknungserfolg vorteilhaft ist, wird die Trockenluftmenge bei steigender Ablufttemperatur gedrosselt, und zwar so stark, daß die Temperatur der Abluft knapp über der Raumtemperatur bleibt. Dies hat eine vollständige Trocknung der Abluft in der Kammer zur Folge, vermeidet ein schadhaftes Aufheizen des Trockners und reduziert die Energieverluste. Die Erfindung ermöglicht außerdem, die in einer gerade regenerierten Kammer enthaltene Wärme zum Vorwärmen der Zuluft auszunützen. Eine gerade regenerierte Kammer braucht daher erfindungsgemäß vor dem Zuschalten in den Trockenluftkreis nicht gesondert gekühlt zu werden. Dies war bisher immer nötig, da das Zuschalten einer ungekühlten Kammer in den Trockenluftkreislauf bei hohen Temperaturen der Abluft einen schädlich hohen Anstieg der Zulufttemperaturen zur Folge hätte.

Zur Herabsetzung der gesamten anfallenden Energieverluste ist erfindungsgemäß auch vorgesehen, daß die Regenerationshäufigkeit der Kammer in Abhängigkeit von der Temperatur der Abluft aus dem Schüttgut-Trocknungsbehälter gesteuert wird. Eine über einen Referenzwert wesentlich ansteigende Temperatur der Abluft ist, wie beobachtet werden konnte, ein Indikator für geringeren Granulatdurchsatz durch den Schüttguttrocknungsbehälter und damit eine indirekte Anzeige für einen verminderten Feuchtigkeitsgehalt der Abluft. Die Erfindung, nämlich eine in diesem Fall entsprechend dem Temperaturanstieg verminderte Regenerationshäufigkeit der Kammer, setzt den Energiebedarf für die Regeneration der Kammer herab. Dabei empfiehlt es sich, die Regenerationshäufigkeit im wesentlichen proportional zum Anstieg der Ablufttemperatur zu verringern.

Sind zwei oder mehrere Trocknungsbehälter vorhanden, ist es bei deren Parallelschaltung unter anderem wegen der unterschiedlichen Entfernung der Trocknungsbehälter zum Trockner und auch wegen der unterschiedlichen Größe der Trocknungsbehälter oft schwierig, die Luftmenge auf die einzelnen Trocknungsbehälter richtig zu verteilen. Diese Verteilung wird auch dadurch erschwert, daß in den einzelnen Trocknungsbehältern sehr unterschiedliches Material getrocknet werden muß, das außerdem einen sehr verschiedenen Widerstand der den Trocknungsbehälter durchströmenden Luft entgegensetzt.

Selbst wenn es gelingt, die Gesamtluftmenge, die von einem Trockner geliefert werden kann, in korrekter Weise auf die einzelnen Trocknungsbehälter zu verteilen, etwa durch manuelles Einstellen von in den Zuleitungen zu den einzelnen Trocknungsbehältern vorgesehenen Drosselklappen, dann wird das einmal erreichte Gleichgewicht bereits dadurch erheblich gestört, daß aus einem Trocknungsbehälter plötzlich mehr Granulat-Masse entnommen wird als geplant war. Wird jedoch einem Trocknungsbehälter mehr oder weniger Trocknungsluft zugeführt als durch den in ihm ablaufenden Trocknungsprozeß erforderlich ist, treten die vorstehend erwähnten Phänomene auf.

In Weiterbildung der Erfindung wird ein schädliches Aufheizen des Trockenluft-Trockners verhindert und auch bei herabgesetztem Granulatdurchsatz durch einen der Trocknungsbehälter ein guter Taupunkt der Trockenluft ermöglicht, wenn die Menge der durch jeden Schüttgut-Trocknungsbehälter strömenden Trocknungsluft in Abhängigkeit von ihrer Austrittstemperatur aus dem jeweiligen Trocknungsbehälter geregelt wird. Damit läßt sich auch ein Mehr-Trocknungsbehälter-System ohne Energieverluste oder schadhaftes Aufheizen des Trockners mit diesem kombinieren.

Eine zur Durchführung des Verfahrens geeignete Vorrichtung, wobei eine Abluftleitung aus einem oder mehreren Schüttgut-Trocknungsbehältern mit dem Ablufttrockner, in dem wenigstens eine mit Adsorptionsmittel gefüllte Kammer, eine Regenerationsvorrichtung für die Kammer sowie ein Gebläse, dessen Druckseite mit einer in den bzw. die Trocknungsbehälter führenden mit einer Heizeinrichtung versehenen Zuluftleitung gekoppelt ist, vorhanden sind, sieht nach der Erfindung vor, daß in der zum Ablufttrockner führenden Luftleitung ein ein Steuergerät beeinflussender Temperaturfühler angeordnet ist. Diese Vorrichtung gestattet in besonders einfacher Weise die Durchführung des erfindungsgemäßen Verfahrens. Dabei kann das Steuergerät entweder eine in der Zuluftleitung angeordnete Drossel oder eine die Druckseite mit der Eingangsseite des Gebläses verbindende Bypassleitung oder den Antrieb des Gebläses steuern im Sinne einer ablufttemperaturgesteuerten Veränderung des Luftdurchsatzes.

Wenn in Weiterbildung der Erfindung das Steuergerät mit einer die Regenerationshäufigkeit der Kammern bestimmenden Einrichtung in der Regenerationsvorrichtung gekoppelt ist, kann die Regenerationshäufigkeit der Kammern im selben Verhältnis wie die Reduzierung der den Trocknungsbehälter durchströmenden Luftmenge herabgesetzt werden. Dies bedeutet eine große Energieersparnis, da bei Trockenlufttrocknern der Regenerationsvorgang einen relativ hohen Energiebedarf hat. Man vermeidet durch diese zusätzliche Ausnutzung des Steuergerätes den Einsatz von teuren Feuchtefühlern im Abluftstrom, mit deren Hilfe man die Regenerationshäufigkeit steuert. Alternativ sieht die Weiterbildung der Erfindung vor, daß eine manuell betätigbare Steuervorrichtung zur Steuerung des Luftdurchsatzes durch die Zuluftleitung vorgesehen ist. Dadurch wird der erfindungsgemäße Trockenluft-Trockner außerordentlich wirtschaftlich und effektiv, weil die Menge des Trockenluftdurchsatzes je nach Menge des anfallenden zu trocknenden Schüttgutes und seines Feuchtigkeitsgehalts anhand von vorgegebenen Richtwerten eingestellt werden kann. Eine zusätzliche Energieeinsparung erhält man durch Kombination der Mengensteuerung der Trockenluft mit einer manuell einstellbaren Regenerationshäufigkeit.

Schließlich kann die Erfindung auch in der Weise durchgeführt werden, daß das Steuergerät mit einer die Überführungsgeschwindigkeit von der Regenerationsphase zur Trocknungsphase bestimmende Einrichtung an der Regenerationsvorrichtung gekoppelt ist. Bei einer Drosselung der Trockenluftmenge kann eine frisch regenerierte, ungekühlte Kammer wesentlich langsamer in den Trockenluftkreislauf eingeschaltet werden, als bei höherem Trockenluftdurchsatz erforderlich ist. Das Steuergerät kann auch ein Verzögerungselement enthalten, welches eine Herabsetzung des Trockenluftdurchsatzes durch die Zuluftleitung bei Umschalten einer frisch regenerierten, heißen Kammer in die Trocknungsphase verzögert wirksam werden läßt.

Eine für die alternative Ausführungsform der Erfindung geeignete Vorrichtung enthält in Weiterbildung der vorstehend charakterisierten Vorrichtung eine die Regenerationshäufigkeit der Kammer bestimmende Einrichtung, die von dem Steuergerät gesteuert ist.

In besonders vorteilhafter Fortentwicklung der Erfindung ist bei der Vorrichtung vorgesehen, daß bei einer parallelen Anordnung von mehreren Schüttgut-Trocknungsbehältern in jeder Luftleitung eines Schüttgut-Trocknungsbehälters ein das Steuergerät beeinflussender Temperaturfühler angeordnet ist, wobei es sich daneben besonders empfiehlt, wenn die zu jedem Trocknungsbehälter führende Luftleitung einen eine motorgetriebene Drosselklappe über eine separate Steuerleitung steuernder Temperaturfühler angeordnet ist.

Zweckmäßige Weiterbildungen der Erfindung sind außerdem in den Unteransprüchen angedeutet.

Die Erfindung wird nachstehend anhand der in den beigefügten Zeichnungen dargestellten Ausführungsbeispiele im einzelnen erläutert. Es zeigen:

Figur 1 einen Schüttgut-Trocknungsbehälter mit einem Trockner in schematischer Querschnittsdarstellung;

Figur 2 eine Draufsicht auf eine Anordnung mehrerer parallel an einen Trockner gem. Fig. 1 angeschlossener Schüttgut-Trocknungsbehälter.

In einem Gehäuse 1 eines Trockenluft-Trockners sind fünf Kammern 2 auf einem Drehgestell angeordnet, das von einem Antriebsmotor 3 langsam um seine Achse 4 gedreht wird. Die Kammern sind mit einem Adsorptionsmittel 5 gefüllt. Ein Gebläse 6 saugt Luft über ein Filter 7 aus einer Abluftleitung 8 an, die an einen Schüttgut-Trocknungsbehälter 9 angeschlossen ist, und drückt sie über einen Verteilerkanal 10 durch vier der fünf mit Adsorptionsmittel 5 gefüllten Kammern 2 hindurch. Aus diesen Kammern strömt die Trocknungsluft über einen Sammelkanal 11 durch eine Heizung 12, die von einem Thermostaten 13 auf die gewünschte Vorwärmtemperatur der austretenden Trocknungsluft geregelt wird, und über eine Zuluftleitung 14 zum Trocknungsbehälter 9. Die Zuluftleitung 14 mündet in einen Luftverteiler 15, der tief in den Trocknungsbehälter 9 hinein reicht. Die trockene, vorgewärmte Trocknungsluft steigt nun langsam durch das Kunststoffgranulat 16 hoch, nimmt dessen Feuchtigkeit auf und gibt dabei einen Teil ihrer Wärme ab. Über die Abluftleitung 8 und den Filter 7 beginnt dann der Kreislauf von neuem.

Von den fünf Kammern 2 liegt die in Figur links dargestellte Kammer 2a in einem vom Kreislauf der Trocknungsluft völlig getrennten Regenerationskreislauf, in dem ein weiteres Filter 17, ein Gebläse 18 und eine Heizung 19 liegen. Dabei saugt das Gebläse 18 Außenluft über den Filter 17 an und drückt sie über die Heizung 19 durch das mit Feuchtigkeit gesättigte Adsorptionsmittel 5a in der Kammer 2a hindurch. Die erhitzte Luft übernimmt in der Kammer 2a die Feuchtigkeit des Adsorptionsmittels 5a und entweicht über das Rohr 20 ins Freie.

Sobald der Regenerationsprozeß des Adsorptionsmittels, also die Ableitung der Feuchtigkeit, beendet ist, wird die frisch regenerierte Kammer 2a von dem Motor 3 in den Trockenluft-Kreislauf gedreht und steht erneut für die Trocknung von Luft zur Verfügung, während eine benachbarte, mit Feuchtigkeit hoch gesättigte Kammer in den Regenerationskreislauf hinein gedreht wird. Für die am Entnahmekasten 21 des Trocknungsbehälters 9 entnommene Menge an getrocknetem Granulat 16 wird von dem Fördergerät 22 ständig feuchtes Granulat nachgefüllt.

In die Abluftleitung 8 ragt das temperatur-empfindliche Element eines Temperaturfühlers 30 und nimmt die Temperatur der Abluft aus dem Trocknungsbehälter 9 auf. Der Temperaturfühler 30 ist über eine Ausgangsleitung 35 mit einem Eingang eines Steuergeräts 31 gekoppelt und überträgt an das Steuergerät 31 ein der festgestellten Temperatur der Abluft entsprechendes Signal. Das Steuergerät 31 vergleicht die festgestellte Temperatur der Abluft mit einem Sollwert, der beispielsweise eine Temperatur knapp über Raumtemperatur entspricht. Liegt die vom Temperaturfühler 30 gemeldete Temperatur oberhalb des Referenzwertes, beaufschlagt das Steuergerät 31 über eine Leitung 37 den Antrieb des Gebläses 6 derart, daß das Gebläse 6 eine verminderte Luftmenge durch die Kammern und die Zuluftleitung 14 in den Trocknungsbehälter 9 drückt. Diese Drosselung der geförderten Zuluftmenge kann in nicht dargestellter Weise entweder dadurch geschehen, daß die Drehzahl des Gebläses 6 herabgesetzt wird, oder daß eine Rückkopplungsleitung 51 von der Druckseite des Gebläses 6 auf dessen Saugseite geöffnet wird und ein Rückströmen eines entsprechenden Anteils der Trockenluftmenge ermöglicht.

Ferner führt eine Abzweigleitung 52 von der Steuerleitung 38 zur einer Drossel 50 in der Zuluftleitung 40, so daß ein vom Steuergerät 31 abgegebenes Steuersignal die Drossel 50 als Funktion der vom Temperaturfühler 30 festgestellten Ablufttemperatur gesteuert werden kann.

Wenn die von dem Temperaturfühler 30 festgestellte Temperatur wesentlich überhalb dem Referenzwert liegt, zeigt dieser Temperaturanstieg an, daß der Granulatdurchsatz durch den Schüttgut-Trocknungsbehälter 9 kleiner geworden ist und daher die Abluft weniger Feuchtigkeit mitführt. Daher kann das Steuergerät 31 ein Verlangsamungssignal in Abhängigkeit von dem Ergebnis des Vergleichs zwischen dem vom Temperaturfühler 30 empfangenen Temperatursignal und dem Referenzwert erzeugen. Das Verlangsamungssignal wird von dem Steuergerät 31 auf Leitung 38 gegeben und von einer Regenerationsfrequenzbestimmungseinrichtung 32 über eine mit der Leitung 38 verbundene Zweigleitung 39 empfangen. Nach Empfang des Verlangsamungssignals läßt die Regenerationshäufigkeits-Bestimmungseinrichtung 32 den Antriebsmotor 3 die Regeneration der Kammer 2 verzögern, indem er die Drehung des Rahmens verlangsamt oder intermittierend unterbricht. Die Amplitude des Verlangsamungssignals 31 aus dem Temperaturfühler 30 empfangenen Temperatursignals zu dem Referenzwert. Daher hängt das Ausmaß der Verzögerung des Beginns der Regeneration der Kammer 2 vom Ausmaß des Temperaturanstiegs in der Abluft ab, und diese Abhängigkeit kann zweckmäßig die Proportionalität sein. Daher kann das Überführen der Kammer 2 in den Regenerationskreislauf bis zu einer noch tolerierbaren Zeitspanne hinausgeschoben werden. Dadurch wird die Feuchtigkeits-Adsorptionsfähigkeit des Adsorptionsmittels 5 in der Kammer 2 vollständiger ausgenutzt und die für die Regeneration aufzuwendende Energie herabgesetzt bzw. teilweise eingespart.

Ferner ist der Antriebsmotor 3 von einer Einrichtung 34 gesteuert, welche die Übergangsgeschwindigkeit von der Regenerationsphase zur Trocknungsphase einer voll regenerierten Kammer 2a zu verlängern gestattet, wenn die vom Gebläse 6 geförderte Zuluftmenge herabgesetzt ist. Dazu führt die Zweigleitung 38 aus dem Steuergerät 31 über eine Leitung 41 zu der Einrichtung 34.

Die Leitung 39, die von der Zweigleitung 38 zur Einrichtung 32 führt, kann auch von einer Steuervorrichtung 33 über Leitung 40 mit einem Signal beaufschlagt werden, wenn einer der manuell betätigbaren einstellknöpfe 42 im Sinne etwa einer Verlängerung der Regenerationszykluszeit entsprechend einem vorgegebenen Tabellenwert verstellt wird. Der Tabellenwert berücksichtigt die Art des im Trocknungsbehälter 9 enthaltenen Kunststoffgranulats, den stündlichen Durchsatz durch den Trocknungsbehälter sowie seinen Feuchtigkeitsgehalt. Ein weiterer Einstellknopf 43 an der Steuervorrichtung 33, der über eine Leitung 44 direkt den Antrieb des Gebläses 6 mit einem Steuersignal zu beaufschlagen gestattet, ermöglicht eine von der Regenerationszykluszeit unabhängige Steuerung der vom Gebläse 6 geförderten Zuluftmenge. Ferner ist in dem Steuergerät 31 ein nicht dargestelltes Verzögerungselement enthalten, welches ein die geförderte Luftmenge durch das Gebläse 6 erhöhende Steuersignal auf die Leitung 37 verzögert gelangen läßt, wenn eine frisch regenerierte, heiße Kammer 2a vom Motor 3 in die Trocknungsphase gedreht wird.

Die Erfindung ist in gleicher Weise auch mit einem geschlossenen Gehäuse 1 für den Trockenluft-Trockner anwendbar. Bei einem geschlossenen Trockenluft-Trockner entfallen die Lüftungsgitter 23 und die Verbindungsleitung 25 zum Filter. Statt dessen wird die für den Regenerationskreislauf benötigte Luftmenge von dem Gebläse 18 unter der Decke des Gehäuses 1 angesaugt. Ferner sind vom Filter 17 ausgehend Ansaugleitungen zum Motor 3 zum Gebläse 6 geführt, welche durch die angesaugte Außenluft gekühlt werden.

Im Gehäuse 1 ist ferner am Weg einer regenerierten Kammer 2a ein Positionsfühler 55 befestigt, dessen Fühler 56 von der Kammer 2a bei ihrem Vorschub durch die Regenerationsphase kontaktiert wird. Der Positionsfühler 55 steuert in nicht dargestellter Weise den Antriebsmotor 3 für das Karussell mit den Kammern 2, 2a sowie den übrigen nicht mit Bezugszeichen versehenen Kammern. Dadurch kann das Karussell vor der Überführung einer regenerierten Kammer in die Trocknungsphase solange angehalten werden, bis die am längsten in der Trocknungsphase verweilende Kammer hinreichend naß ist. Als Maß für die in einer Kammer aufgenommene Feuchtigkeit kann die Häufigkeit genommen werden, mit welcher der Luftdurchsatz durch den Trocknungsbehälter durch den Fühler 30 und das Steuergerät 31 gedrosselt wurde.

Alternativ kann statt dessen direkt die Temperaturanzeige des Fühlers 30 verwandt werden, der ebenfalls durch eine Erhöhung der Vergleichstemperatur anzeigt, daß die Feuchtigkeitsmenge im Abluftstrom herabgesetzt ist.

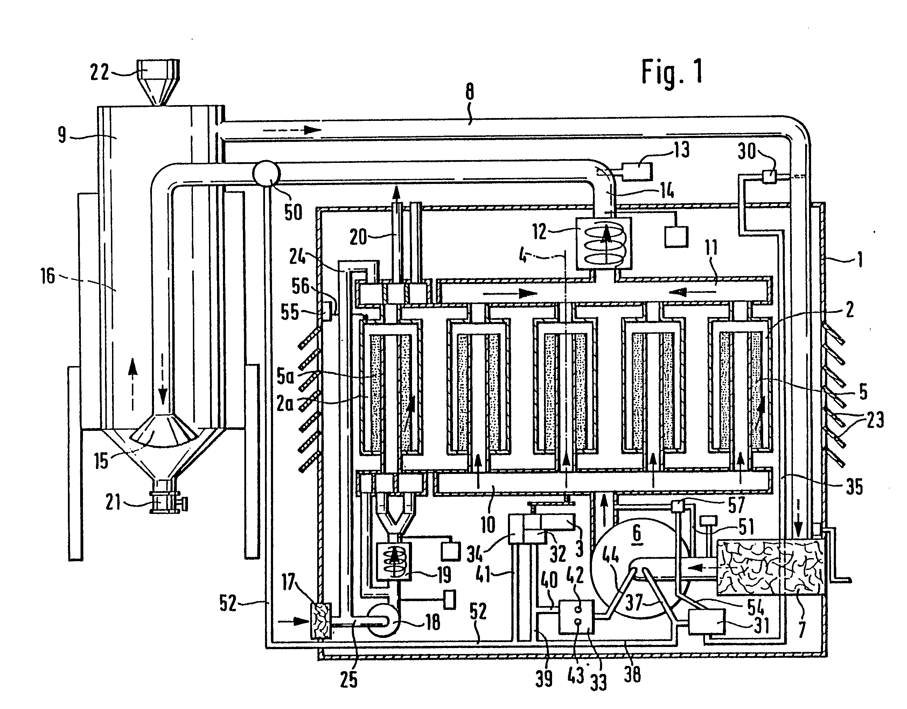

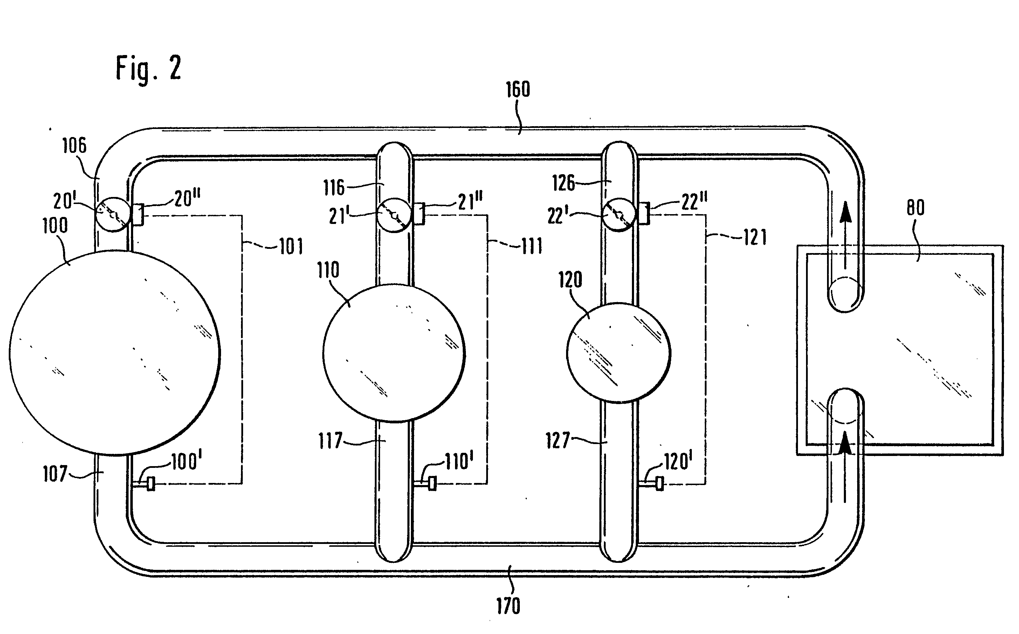

Gemäß Fig. 2 sind Schüttgut-Trocknungsbehälter 100, 110, 120 unterschiedlicher Füllmengen von 1 000 Liter bis 200 Liter parallel an einen Trockner 80 der in Fig. 1 dargestellten Art über eine Zuluftleitung 160 und eine Abluftleitung 170 angeschlossen. Von der Zuluftleitung 160 führt ein Abschnitt 106 zu dem Trocknungsbehälter 100, eine Zuluftzweigleitung 116 zu dem Trocknungsbehälter 110 und eine Zuluftzweigleitung 126 zu dem Trocknungsbehälter 120. Vom Trocknungsbehälter 100 führt ein Abschnitt 107 zur Abluftleitung 170, vom Trocknungsbehälter 110 führt eine Abzweig-Abluftleitung 117 und vom Trocknungsbehälter führt eine Abzweig-Abluftleitung 127 jeweils zu der Abluftleitung 170.

Unmittelbar vor dem Einlaß zu jedem der Trocknungsbehälter 100, 110, 120 ist in den Leitungen 106, 116, 126 je eine Drosselklappe 20', 21', 22' angeordnet, deren Stellung im Querschnitt der zugehörigen Zuluftleitung von je einem Stellmotor 20", 21", 22" gesteuert wird. Von jedem der Stellmotore 20", 21", 22" führt eine separate Steuerleitung 101 zu einem Thermofühler 100', 110', 120', der in der zu dem zugehörigen Schüttgut-Trocknungsbehälter 100, 110, 120 führenden anderen Luftleitung 107, 117, 127 angeordnet ist. Jeder der Temperaturfühler 100', 110', 120' gibt ein Stellsignal über die zugehörige Steuerleitung 101, 111, 121 an die zugehörige Steuerleitung angeschlossenen Stellmotor 20", 21", 22", welches diesen entsprechend einer charakteristischen Größe des Steuersignals zu einer entsprechenden Stellung der Drosselklappe 20', 21', 22' veranlaßt. Ist beispielsweise die Abluft aus dem Schüttgut-Trocknungsbehälter 100 zu warm, wird die Drosselklappe 20' durch den Stellmotor 20" weitergeschlossen.

Es liegt auch im Rahmen der Erfindung, daß jede der Drosselklappen 20', 21', 22' auch manuell auf eine wählbare Ausgangsstellung einstellbar ist. Schließlich kann die Erfindung auch in der Weise realisiert werden, daß die Steuerleitungen 101, 111, 121 separat einem nicht dargestellten, etwa im Steuergerät 31 des Trockners 80 befindlichen Mikroprozessor zugeführt werden, der, ggf. in Auswertung weiterer aus den Schüttgut-Trocknungsbehältern 100, 110, 120 aufgenommener Meßwerte die von den Temperaturfühlern 100', 110', 120' gelieferten Steuersignale zur individuellen Abgabe von Steuersignalen über nicht dargestellte Steuerleitungen zu den jeweiligen Stellmotoren 20", 21", 22" veranlaßt. Dadurch ist eine zentrale Steuerung der Luftdurchsatzmenge durch jeden sowie durch die Gesamtheit der Schüttgut-Trocknungsbehälter 100, 110, 120 möglich, so daß diese Auslegung der Erfindung eine besonders feinfühlige Anpassung des Luftdurchsatzes an die jeweiligen Betriebsphasen und -bedingungen der einzelnen Schüttgut-Trocknungsbehälter 100, 110, 120 ergibt. Ferner liegt es im Rahmen der Erfindung, einerseits den Temperaturfühler in der Abluft-Zweigleitung und die motorisch gesteuerte Drosselklappe in der Zuluft-Zweigleitung und andererseits den Temperaturfühler in der Zuluft-Zweigleitung und die Drosselklappe in der Abluft-Zweigleitung anzuordnen.

In vorstehender Beschreibung sowie in den Ansprüchen umfaßt der Begriff « Luft » auch übliche Gase, wie etwa Stickstoff, dessen Verwendung sich in vielen Fällen je nach zu trocknendem Granulat und/oder der Trockenmasse im Trockner empfiehlt.

Ferner kann die Erfindung nicht nur mit kontinuierlich rotierenden Zwei-Kammer-Trocknern, sondern auch mit feststehenden Trocknern ausgeführt werden, bei denen von dem Steuergerät 31 in Abhängigkeit vom Temperaturfühler 30 gesteuerte Wechselventile vorgesehen sind. Derartige Trockner sind als Whitlock-Trockner bekannt.

**Patentansprüche**

1. Verfahren zum Trocknen von Abluft aus einem oder mehreren parallel angeordneten Schüttgut-Trocknungsbehältern (9 ; 100, 110, 120), die durch wenigstens eine mit Adsorptionsmittel gefüllte Kammer (2) geführt und in einem geschlossenen Kreislauf dem oder den Trocknungsbehältern wieder zugeleitet wird, wobei die Kammer in zeitlichen Abständen mit einem Luftkreislauf regeneriert wird, dadurch gekennzeichnet, daß die Menge des Luftdurchsatzes durch den bzw. die Schüttgut-Trocknungsbehälter (9 ; 100, 110, 120) in Abhängigkeit von der Temperatur der Abluft aus dem bzw. den jeweiligen Trocknungsbehältern (9 ; 100, 110, 120) gesteuert wird.

2. Verfahren nach Anspruch 1, dadurch gekennzeichnet, daß die Mengenänderung des Luftdurchsatzes durch Verändern der Drehzahl eines mit der Kammer (2) gekoppelten Gebläses (6) erfolgt.

3. Verfahren nach Anspruch 1 oder 2, dadurch gekennzeichnet, daß die Mengenänderung des Luftdurchsatzes durch eine in der Zuluftleitung (14 ; 106, 116, 126) für den jeweiligen Trocknungsbehälter (9 ; 100, 110, 120) angeordnete Drossel (50 ; 20', 21', 22') erfolgt.

4. Verfahren nach einem der Ansprüche 1 bis 3, dadurch gekennzeichnet, daß die Mengenänderung des Luftdurchsatzes durch das Öffnen und Schließen einer Bypass-Leitung (51) des Gebläses (6) erfolgt.

5. Verfahren nach einem der Ansprüche 1 bis 4, dadurch gekennzeichnet, daß eine frisch regenerierte Kammer (2a) derart in die Trocknungsphase überführt wird, daß die in der gerade regenerierten Kammer (2a) enthaltene Wärme zum Vorwärmen der Zuluft ausgenutzt wird.

6. Verfahren nach Anspruch 5, dadurch gekennzeichnet, daß die Luftmenge unmittelbar vor Zuführung der gerade regenerierten Kammer (2a) in den Trocknungskreislauf unabhängig von der Temperatur der Abluft gedrosselt wird.

7. Verfahren nach einem der vorstehenden Ansprüche, dadurch gekennzeichnet, daß über die Steuerung über die Ablufttemperatur die Regenerationshäufigkeit eingestellt wird.

8. Verfahren nach Anspruch 7, dadurch gekennzeichnet, daß die Regenerationshäufigkeit im wesentlichen proportional zu einem Anstieg der Ablufttemperatur vermindert wird.

9. Vorrichtung zur Durchführung des Verfahrens gemäß einem der vorstehenden Ansprüche, wobei eine Abluftleitung (8 ; 107, 117, 127) aus einem oder mehreren Schüttgut-Trocknungsbehältern (9 ; 100, 110, 120) mit dem Ablufttrockner (1 ; 80), in dem wenigstens eine mit Adsorptionsmittel gefüllte Kammer (2, 2a), eine Regenerationsvorrichtung für die Kammer sowie ein Gebläse (6), dessen Druckseite mit einer in den bzw. die Trocknungsbehälter (9 ; 100, 110, 120) führenden mit einer Heizeinrichtung (12) versehenen Zuluftleitung (14 ; 160, 106, 116, 126) gekoppelt ist, vorhanden sind, dadurch gekennzeichnet, daß in der zum Ablufttrockner (1 ; 80) führenden Luftleitung (8 ; 107, 117, 127) ein ein Steuergerät (31) beeinflussender Temperaturfühler (30 ; 100', 110', 120') angeordnet ist.

10. Vorrichtung nach Anspruch 9, dadurch gekennzeichnet, daß das Steuergerät (31) mit dem Antrieb des Gebläses (6) gekoppelt ist.

11. Vorrichtung nach einem der Ansprüche 9 oder 10, dadurch gekennzeichnet, daß das Steuergerät (31) mit einer die Regenerationshäufigkeit der Kammer (2, 2a) bestimmenden Einrichtung (32) gekoppelt ist.

12. Vorrichtung nach einem der Ansprüche 9 bis 11, gekennzeichnet durch eine manuell betätigbare Steuervorrichtung (33) zur Steuerung des Luftdurchsatzes durch die Luftleitung (8, 14).

13. Vorrichtung nach einem der Ansprüche 9 bis 12, gekennzeichnet durch eine manuell betätigbare Steuervorrichtung (33) zur Steuerung der Regenerationshäufigkeit der Kammer (2, 2a).

14. Vorrichtung nach einem der Ansprüche 9 bis 13, dadurch gekennzeichnet, daß das Steuergerät (31) mit einer die Überführungsgeschwindigkeit einer frisch regenerierten Kammer (2, 2a) in den Trocknungskreislauf bestimmenden Einrichtung (34) gekoppelt ist.

15. Vorrichtung nach einem der Ansprüche 9 bis 14, dadurch gekennzeichnet, daß das Steuergerät (31) ein Verzögerungselement enthält, welches eine Herabsetzung des Luftdurchsatzes durch die Luftleitung (8, 14) bei Zuschalten einer frisch regenerierten Kammer (2a) in Trocknungsphase verzögert wirksam werden läßt.

16. Vorrichtung nach einem der Ansprüche 14 oder 15, dadurch gekennzeichnet, daß ein Positionsfühler (55) an einem mehrere Kammern (2, 2a) auweisenden Karussell vorgesehen ist, welcher ein den Antrieb des Karussell vorübergehend reduzierendes Verzögerungselement steuert.

17. Vorrichtung nach einem der Ansprüche 9 bis 16, dadurch gekennzeichnet, daß das Steuergerät (31) und das Gebläse (6) in einem geschlossenen Gehäuse untergebracht sind.

18. Vorrichtung nach einem der Ansprüche 9 bis 17, dadurch gekennzeichnet, daß in der Abluftleitung (106, 116, 126) je eines Schüttgut-Trocknungsbehälters (100, 110, 120) ein eine motorisch gesteuert betätigbare Drosselklappe (20', 21', 22') über eine separate Steuerleitung (101, 111, 121) beeinflussender Temperaturfühler (100', 110', 120') angeordnet ist.

## Claims

1. A method of drying air which is discharged from a dryer-receiver for bulk material or a number of them arranged in parallel (9 ; 100, 110, 120) and is led through at least one chamber (2) filled with a means of adsorption and passed back again in a closed circuit to the dryer-receiver or receivers, the chamber being regenerated at intervals of time by an air circuit, characterized in that the amount of air passed through the dryer-receiver or receivers for bulk material (9 ; 100, 110, 120) is controlled in dependence upon the temperature of the air discharged from the dryer-receiver or the respective dryer-receivers (9 ; 100, 110, 120).

2. A method as in Claim 1, characterized in that the alteration in the amount of air passed through is effected by altering the speed of rotation of a blower (6) coupled to the chamber (2).

3. A method as in Claim 1 or 2, characterized in that the alteration in the amount of air passed through is effected by a throttle-valve (50 ; 20', 21', 22') arranged in the air inlet piping (14 ; 106, 116, 126) to the respective dryer-receivers (9 ; 100, 110, 120).

4. A method as in one of the Claims 1 to 3, characterized in that the alteration in the amount of air passed through is effected by the opening and closing of a pipe (51) bypassing the blower (6).

5. A method as in one of the Claims 1 to 4, characterized in that a freshly regenerated chamber (2a) is transferred into the drying phase in such a way that the heat contained in the chamber (2a) which has just been regenerated is utilized for preheating the inlet air.

6. A method as in Claim 5, characterized in that directly before delivery into the drying circuit, of the chamber (2a) which has just been regenerated, the amount of air is throttled independently of the temperature of the air discharged.

7. A method as in one of the preceding Claims, characterized in that the frequency of regeneration is set via the control over the temperature of the air discharged.

8. A method as in Claim 7, characterized in that the frequency of regeneration is reduced essentially in proportion to a rise in the temperature of the air discharged.

9. A device for the performance of the method in accordance with one of the preceding Claims, in which a pipe (8 ; 107, 117, 127) for the air discharged from one or more dryer-receivers for bulk material (9 ; 100, 110, 120) (? is connected to ?) the dryer (1 ; 80) for the air discharged, in which dryer there are at least one chamber (2, 2a) filled with means of adsorption, one regeneration device for the chamber as well as one blower (6) the pressure side of which is coupled to an air inlet pipe (14 ; 160, 106, 116, 126) provided with a heater (12) and leading into the dryer-receiver or receivers (9 ; 100, 110, 120), characterized in that a temperature sensor (30 ; 100', 110', 120') which influences a control apparatus (31) is arranged in the airpipe (8 ; 107, 117, 127) leading to the dryer (1 ; 80) for the air discharged.

10. A device as in Claim 9, characterized in that the control apparatus (31) is coupled to the drive of the blower (6).

11. A device as in one of the Claims 9 or 10, characterized in that the control apparatus (31) is coupled to a device which determines the frequency of regeneration of the chamber (2, 2a).

12. A device as in one of the Claims 9 to 11, characterized by a manually actuable control device (33) for the control of the air passed through the airpipe (8, 14).

13. A device as in one of the Claims 9 to 12, characterized by a manually actuable control device (33) for the control of the frequency of regeneration of the chamber (2, 2a).

14. A device as in one of the Claims 9 to 13, characterized in that the control apparatus (31) is coupled to a device (34) which determines the speed of transfer of a freshly regenerated chamber (2, 2a) into the drying circuit.

15. A device as in one of the Claims 9 to 14, characterized in that the control apparatus (31) contains a delay element which upon switching a freshly regenerated chamber (2a) into the drying phase makes a reduction in the air passed through the airpipe (8, 14) become effective with a delay.

16. A device as in one of the Claims 14 or 15, characterized in that on a roundabout which exhibits a number of chambers (2, 2a) a position sensor (55) is provided, which controls a delay element which temporarily reduces the drive of the roundabout.

17. A device as in one of the Claims 9 to 16, characterized in that the control apparatus (31) and the blower (6) are accommodated in a closed housing.

18. A device as in one of the Claims 9 to 17, characterized in that in the pipe (106, 116, 126) for the air discharged from each one of the dryer-receivers (100, 110, 120) for bulk material a temperature sensor (100', 110', 120') is arranged, which via a separate control lead (101, 111, 121) influences a throttle valve (20', 21', 22') actuable by motor control.

**Revendications**

1. Procédé de séchage de l'air sortant d'une ou de plusieurs cellules de séchage de matières en vrac (9 ; 100, 110, 120) disposées en parallèle, ledit air transitant par au moins une chambre (2) remplie d'adsorbant et étant acheminé par un circuit fermé vers la ou les cellules de séchage, étant entendu que la chambre est régénérée à intervalles réguliers à l'aide d'un second circuit d'air, caractérisé en ce que le débit d'air traversant la ou les cellule(s) de séchage de matière en vrac est régulé en fonction de la température de l'air sortant de la ou des cellules de séchage de matière en vrac (9 ; 100, 110, 120).

2. Procédé conforme à la revendication 1, caractérisé en ce que le débit d'air varie en modifiant le débit d'une soufflante (6) couplée avec la chambre (2).

3. Procédé conforme à la revendication 1 ou 2, caractérisé en ce que le débit d'air peut être modifié par un étranglement (50 ; 20', 21', 22') implanté dans la conduite d'alimentation (14 ; 106, 116, 126) de chaque cellule de séchage de matière en vrac (9 ; 100, 110, 120).

4. Procédé conforme à l'une des revendications 1 à 3, caractérisé en ce que le débit d'air peut être modifié en ouvrant ou en fermant une conduite de dérivation (51) de la soufflante (6).

5. Procédé conforme à l'une des revendications 1 à 4, caractérisé en ce que le passage d'une chambre fraîchement régénérée 2a en phase de séchage s'effectue en utilisant la chaleur de ladite chambre fraîchement régénérée (2a) pour réchauffer l'air entrant.

6. Procédé conforme à la revendication 5, caractérisé en ce que, immédiatement avant que la chambre fraîchement régénérée (2a) ne soit reliée au circuit de séchage, le volume d'air est réduit indépendamment de la température de l'air sortant.

7. Procédé conforme à l'une des revendications précédentes, caractérisé en ce que la fréquence de régénération est réglée par l'intermédiaire du dispositif de régulation de la température de l'air sortant.

8. Procédé conforme à la revendication 7, caractérisé en ce que, pour l'essentiel, la fréquence de régénération est réduite proportionnellement à l'élévation de la température de l'air sortant.

9. Dispositif permettant de réaliser le procédé conforme à l'une des revendications précédentes, comprenant une conduite de sortie d'air (8 ; 107, 117, 127) débouchant d'une ou de plusieurs cellules de séchage de matière en vrac (9 ; 100, 110, 120), raccordée au séchoir d'air de sortie (1 ; 80) composé d'au moins une chambre (2, 2a) remplie d'adsorbant, d'un dispositif de régénération réservé à la chambre ainsi que d'une soufflante (6) dont le côté refoulement est relié à une conduite d'alimentation (14 ; 160, 106, 116, 126) équipée d'un système de chauffage (12) et débouchant dans la ou les cellules de séchage de matière en vrac (9 ; 100, 110, 120), caractérisé en ce qu'un capteur de température (30 ; 100', 110', 120') agissant sur un appareil de commande (31) est implanté dans la conduite d'air (8 ; 107, 117, 127) menant au séchoir d'air de sortie (1 ; 80).

10. Dispositif conforme à la revendication 9, caractérisé en ce que l'appareil de commande (31) est couplé avec le mécanisme d'entraînement de la soufflante (6).

11. Dispositif conforme à l'une des revendications 9 ou 10, caractérisé en ce que l'appareil de commande (31) est couplé avec un système (32) déterminant la fréquence de régénération des chambres (2, 2a).

12. Dispositif conforme à l'une des revendications 9 à 11, caractérisé en ce qu'il est équipé d'un dispositif de commande manuel (33) permettant de réguler le débit d'air passant dans la conduite d'air (8, 14).

13. Dispositif conforme à l'une des revendications 9 à 12, caractérisé en ce qu'il est équipé d'un dispositif de commande manuel (33) permettant de réguler la fréquence de régénération de la chambre (2, 2a).

14. Dispositif conforme à l'une des revendications 9 à 13, caractérisé en ce que l'appareil de commande (31) est couplé avec un système (34) déterminant la vitesse de passage d'une chambre fraîchement régénérée (2, 2a) dans le circuit de séchage.

15. Dispositif conforme à l'une des revendications 9 à 14, caractérisé en ce que l'appareil de commande (31) renferme un élément de temporisation qui permet de retarder la diminution du débit d'air passant dans la conduite d'air (8, 14) lors du passage d'une chambre fraîchement régénérée (2a) en phase de séchage.

16. Dispositif conforme à l'une des revendications 14 ou 15, caractérisé en ce qu'un capteur de positionnement (55) est prévu sur un carrousel équipé de plusieurs chambres (2, 2a), ledit capteur permettant de piloter un élément de temporisation réduisant provisoirement le mécanisme de commande dudit carrousel.

17. Dispositif conforme à l'une des revendications 9 à 16, caractérisé en ce que l'appareil de commande (31) et la soufflante (6) sont logés dans une enceinte fermée.

18. Dispositif conforme à l'une des revendications 9 à 17, caractérisé en ce qu'un capteur de température (100', 110', 120') agissant sur un volet d'étranglement motorisé (20', 21', 22') par l'intermédiaire d'une conduite de commande séparée (101, 111, 121) est implanté sur la conduite de sortie d'air (106, 116, 126) de chaque cellule de séchage de matière en vrac (100, 110, 120).

Fig. 1

0 061 161

Fig. 2